# FASCICULE DE BREVET EUROPEEN

(11) **EP 1 693 852 B1**
(45) Date de publication et mention de la délivrance du brevet: **03.01.2018**
(21) Numéro de dépôt: 06290272.1
(22) Date de dépôt: 17.02.2006
(51) Int. Cl.: G11B 33/08

(54) **Dispositif électronique avec capot en matière plastique recevant un équipement susceptible de générer des vibrations**
Elektronische Vorrichtung mit Kunststoffabdeckung, die eine Apparatur aufnimmt, die Vibrationen erzeugen kann
Electronic device with plastic material cover accommodating a piece of equipment likely to generate vibrations

(30) Priorité: 22.02.2005 FR 0501762
(43) Date de publication de la demande: 23.08.2006
(73) Titulaire: SAGEMCOM BROADBAND SAS, 92500 Rueil Malmaison (FR)
(72) Inventeur: Susini, Dominique, 92500 RUEIL MALMAISON (FR)
(74) Mandataire: Parzy, Benjamin Alain

(56) Documents cités:
- WO-A-2004/061326
- US-A- 5 668 697
- US-A1- 2004 228 073
- US-B1- 6 292 455
- PATENT ABSTRACTS OF JAPAN vol. 2002, no. 12, 12 décembre 2002 (2002-12-12) & JP 2002 227929 A (KONICA CORP), 14 août 2002 (2002-08-14)

## Description

L'invention concerne un dispositif électronique avec capot en matière plastique recevant un équipement susceptible de générer des vibrations, comme par exemple un disque dur.

### ARRIERE-PLAN DE L'INVENTION

Il est connu que les capots en matière plastique forment une caisse de résonance susceptible d'amplifier les vibrations de l'équipement et ainsi de les rendre désagréables et fatigantes pour l'entourage.

Pour éviter cette résonance, l'équipement est en général vissé dans un berceau en tôle métallique qui est vissé sur le capot en matière plastique avec interposition d'amortisseurs en élastomère chargés de filtrer la transmission au capot de vibrations du berceau induites par les vibrations de l'équipement.

Ce type de montage nécessite donc une double opération d'assemblage, ce qui se révèle onéreux dans le cadre d'une production en grande série.

On connaît des documents US2004/228073, JP 2002/227929, ou US5 668 697 des dispositifs dans lesquels l'équipement est prééquipé d'amortisseurs, ces derniers étant introduits simultanément dans des encoches réalisés sur les bords du capot.

### OBJET DE L'INVENTION

L'invention vise à rendre plus simple et plus facilement automatisable l'assemblage d'un équipement susceptible de générer des vibrations à un capot en matière plastique d'un dispositif électronique, tout en évitant l'effet de résonance.

### BREVE DESCRIPTION DE L'INVENTION

A cet effet, on propose un dispositif électronique comportant un capot en matière plastique auquel est fixé un équipement susceptible de générer des vibrations, le dispositif étant conforme aux caractéristiques de la revendication 1.

Les encoches servent de guides aux amortisseurs lors de l'assemblage de l'équipement au capot. Il suffit de prééquiper l'équipement de ses amortisseurs et de ses vis, puis de présenter l'ensemble ainsi constitué en regard du capot pour glisser les amortisseurs dans les encoches des ailes. L'assemblage en est nettement simplifié.

L'assemblage selon l'invention permet de monter l'équipement directement sur le capot en matière plastique, tout en réduisant la transmission de vibrations entre l'équipement et le capot.

L'agencement des encoches selon l'invention oblige à monter d'abord les amortisseurs alignés dans les encoches à portion d'extrémité faisant un angle avec la perpendiculaire au fond du capot, puis, à faire pivoter l'équipement pour faire pénétrer les autres amortisseurs dans les encoches correspondantes.

### BREVE DESCRIPTION DES DESSINS

L'invention sera mieux comprise à la lumière de la description qui suit en référence aux figures des dessins annexés parmi lesquelles :
- la figure 1 est une vue d'un dispositif électronique selon l'invention en cours d'assemblage, l'équipement étant ici un disque dur ;
- la figure 2 est une vue en coupe selon la ligne II-II de la figure 1 de l'un des amortisseurs ;
- la figure 3 est une vue du dispositif électronique de la figure 1, le disque dur étant en place sur le capot ;
- la figure 4 est une vue partielle selon la flèche IV de la figure 3, le couvercle étant représenté en coupe selon un plan parallèle à une aile et décalé par rapport à cette aile.

### DESCRIPTION DETAILLEE DE L'INVENTION

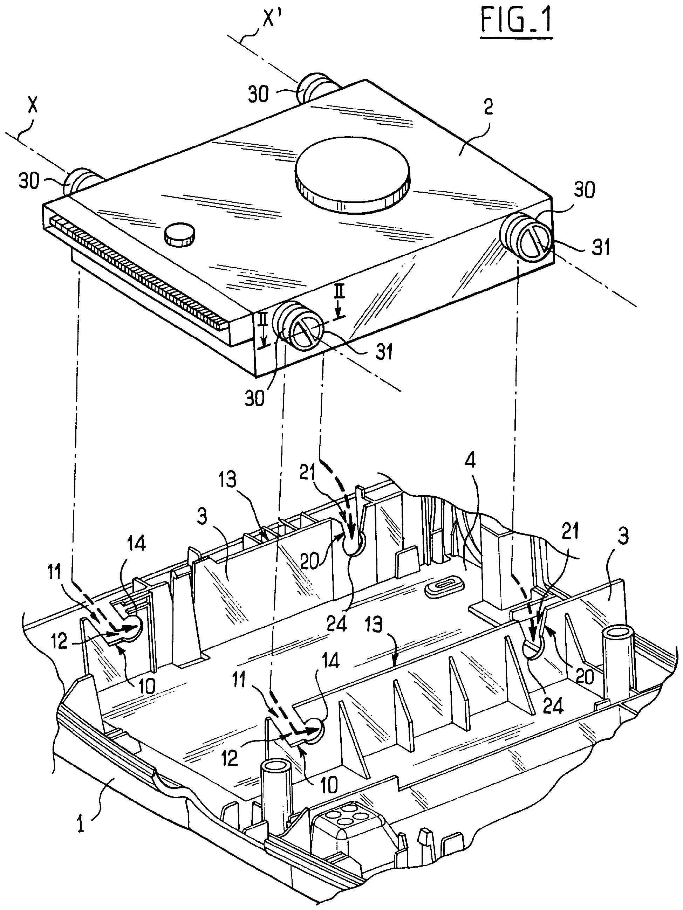

En référence à la figure 1, le dispositif électronique de l'invention comporte un capot 1 en matière plastique destiné à recevoir un équipement tel qu'un disque dur 2.

Le capot 1 comporte deux ailes 3 parallèles qui s'étendent en saillie d'un fond 4 du capot 1 et qui délimitent entre elles un réceptacle pour le disque dur 2.

Chacune des ailes 3 comporte une première encoche 10 présentant une portion d'entrée 11 qui débouche en s'évasant sur une portion du bord 13 est parallèle au fond 4. La portion d'entrée 11 s'étend obliquement par rapport à cette portion de bord, ici à 45 degrés.

La première encoche 10 comporte également une portion d'extrémité 12 dans laquelle débouche la portion d'entrée 11 et qui s'étend parallèlement au fond 4 pour se terminer par un réceptacle 14 à contour circulaire. La portion d'entrée 11 et la portion d'extrémité 12 forment entre elles un angle ouvert.

Chacune des ailes 3 comporte en outre une deuxième encoche 20 ayant une portion d'entrée 21 qui débouche en s'évasant sur la même portion du bord 13 et qui s'étend perpendiculairement au fond 4 pour se terminer par un réceptacle 24 à contour circulaire.

Les encoches 10, 20 sont destinées à recevoir des amortisseurs 30 en élastomère maintenus sur le côté du disque dur 2 par des vis de fixation 31 qui s'étendent chacune dans un orifice central de l'amortisseur associé.

On remarquera que les réceptacles 14 et 24 sont précédés d'un rétreint qui forme un point dur immobilisant les amortisseurs 30 dans les réceptacles.

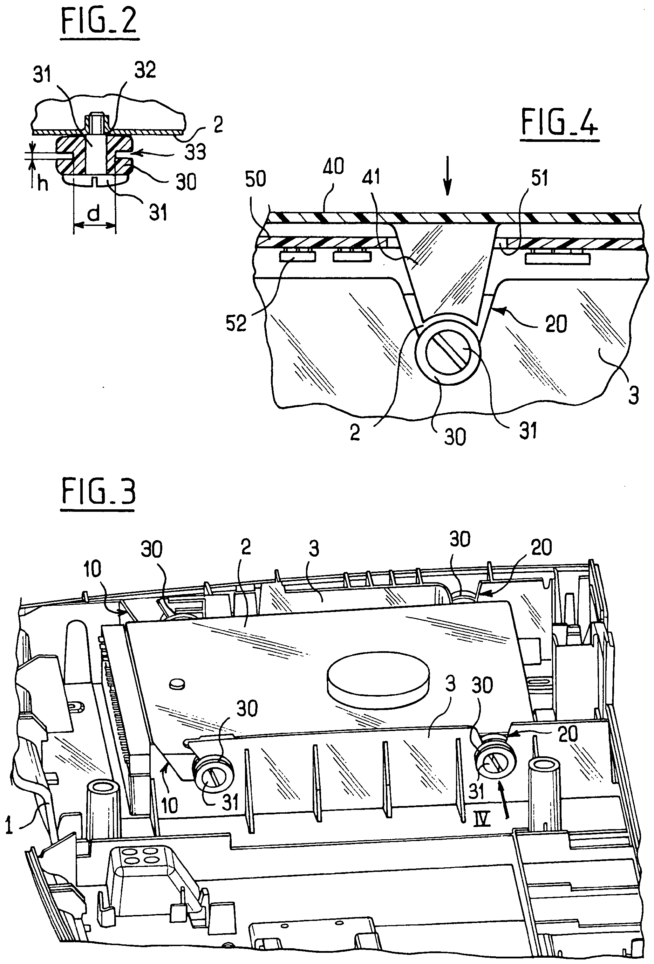

Comme cela est visible à la figure 2, les vis de fixation 31 comportent un épaulement 32 et sont vissées sur la paroi du disque dur 2 de sorte que l'épaulement 32 soit en contact contre la paroi. L'épaulement 32 définit entre la paroi du disque dur 2 et la tête de la vis de fixation 31 une distance inférieure à l'épaisseur au repos de l'amortisseur 30, de sorte que lors de la fixation de l'amortisseur 30 au disque dur 2, l'amortisseur est légèrement compressé.

L'amortisseur 30 est ici de révolution et comporte une gorge 33 de largeur h légèrement inférieure à l'épaisseur des ailes 3. La gorge 33 présente un diamètre de fond d légèrement supérieur au diamètre des réceptacles 14,24 des encoches 10,20.

Revenant à la figure 1, l'assemblage du disque dur 2 au capot 1 comporte tout d'abord l'étape de prééquiper le disque dur 2 de ses amortisseurs 30 et de ses vis de fixation 31, comme illustré. On remarquera que les vis de fixation 31 (et les amortisseurs correspondants) sont alignées deux par deux, de sorte qu'elles s'étendent par paires selon deux axes parallèles, respectivement X et X'.

Les amortisseurs 30 s'étendant selon l'axe X sont engagés dans les portions d'entrée 11 des premières encoches 10 en faisant en sorte que les arêtes délimitant les portions d'entrée 11 pénètrent dans les gorges 33 des amortisseurs 30. Ces derniers sont alors à cheval sur les ailes 3 et s'étendent de part et d'autre de l'aile 3.

Les amortisseurs 30 sont poussés jusqu'au fond de la portion d'entrée, puis poussés le long de la portion d'extrémité jusque dans le réceptacle 14. Le trajet coudé des amortisseurs est figuré sur la figure 1 par des flèches en traits mixtes épais.

L'angle ouvert entre la portion d'entrée 11 et la portion d'extrémité 12 permet d'éviter un rebroussement dans le trajet des amortisseurs, ce qui facilite leur mise en place par une installation robotisée.

Enfin, le disque dur 2 est basculé autour de l'axe X pour faire pénétrer les amortisseurs 30 s'étendant selon l'axe X' dans les deuxièmes encoches 20 et les pousser jusque dans les réceptacles 24. Le trajet circulaire des amortisseurs est figuré sur la figure 1 par des flèches en traits mixtes épais.

Le résultat de cette opération d'assemblage est visible à la figure 3.

Comme cela est visible à la figure 4, il reste alors à mettre en place sur le disque dur 2 une carte à circuit imprimé 50 comportant des composants électroniques 52 de contrôle du disque dur 2, et un couvercle de protection 40.

Sur la figure 3, on constate que la partie des ailes 3 qui s'étend entre les réceptacles 14,24 s'oppose à tout mouvement des amortisseurs 30 lors d'un choc selon une direction parallèle à la fois au fond du capot 1 et aux ailes 3.

En outre, les portions d'extrémité 12 des premières encoches 10 qui s'étendent parallèlement au fond du capot 1 forment un verrou qui empêchent les amortisseurs 30 engagés dans les premières encoches 10 de quitter les réceptacles 14 en cas de choc selon une direction perpendiculaire au fond du capot 1.

Seuls les amortisseurs 30 engagés dans les deuxièmes encoches 20 sont susceptibles de sortir de leurs encoches lors d'un tel choc.

Pour supprimer ce risque, et comme cela est visible à la figure 4, on équipe le couvercle de protection 40 du disque dur 2 de deux doigts de verrouillage 41 (un seul est ici visible) qui, lorsque le couvercle de protection 40 est en position, sont engagés dans les portions d'entrée des deuxièmes encoches 20 pour verrouiller les amortisseurs 30 en position dans les réceptacles 24.

On notera que les doigts de verrouillage 41 s'étendent au travers de la carte à circuit imprimé 50 dans des orifices 51 correspondants de celle-ci.

L'association des premières encoches en forme de baïonnette et de deuxièmes encoches de forme classique, qui procure un verrouillage naturel des amortisseurs 30 engagés dans les premières encoches 10, permet de limiter à deux le nombre de doigts de verrouillage 41, ainsi que le nombre d'orifices 51 réalisés sur la carte à circuit imprimé 50.

Par comparaison, la réalisation de quatre encoches de forme classique aurait nécessité la présence de quatre doigts de verrouillage, et donc de quatre orifices sur la carte à circuit imprimé.

L'espace ainsi libéré sur la carte à circuit imprimé 50 par la suppression de deux orifices facilite la mise en place des composants électroniques 52 sur celle-ci .

L'invention n'est pas limitée à ce qui vient d'être décrit, mais bien au contraire englobe toute variante entrant dans le cadre défini par les revendications.

En particulier, bien que l'on ait ici illustré les encoches comme débouchant sur une partie du bord de l'aile parallèle au fond du capot, les encoches pourront déboucher sur une partie latérale de ce bord. En particulier, les premières encoches pourront s'étendre entièrement selon une direction sensiblement parallèle au fond du capot pour déboucher latéralement sur le bord de l'aile.

Bien que l'on ait illustré l'invention en application à un dispositif électronique équipé d'un disque dur, l'invention s'applique plus généralement à un dispositif électronique équipé d'un équipement susceptible de provoquer des vibrations, tel qu'un lecteur de CD ou un ventilateur.

## Revendications

1. Dispositif électronique comportant un capot (1) et un équipement (2) susceptible de générer des vibrations et fixé au capot, l'équipement étant pourvu d'au moins deux paires d'amortisseurs élastomères (30) fixés à l'équipement pour être parallèles les uns aux autres, les amortisseurs de chaque paire d'amortisseurs étant disposés de part et d'autre de l'équipement en étant alignés sur un axe commun (X, X'), le capot comportant deux ailes (3) parallèles qui s'étendent en saillie d'un fond (4) du capot et qui présentent chacune un bord (13) sur lequel débouchent des encoches (10, 20) ayant des parties terminales formant des réceptacles pour les amortisseurs élastomères (30) de telle manière que l'axe commun (X, X') soit perpendiculaire aux ailes, **caractérisé en ce que** le capot est en matière plastique, les encoches comprennent deux premières encoches (10) en regard l'une de l'autre qui sont ménagées chacune dans une aile et qui ont une portion d'extrémité (12) débouchant dans le réceptacle et formant un angle non-nul avec une direction perpendiculaire au fond du capot, et deux deuxièmes encoches (20) en regard l'une de l'autre et ménagées chacune dans une aile pour s'étendre selon la direction perpendiculaire au fond (4) du capot (1).

2. Dispositif selon la revendication 1, **caractérisé en ce que** les premières encoches (10) comportent une portion d'entrée (11) qui forme un angle ouvert avec la portion d'extrémité (12).

3. Dispositif selon la revendication 1, **caractérisé en ce que** les encoches (10,20) comportent une portion d'entrée (11,21) qui s'étend en s'évasant vers le bord (13) de l'aile (3) associée.

4. Dispositif selon la revendication 1, **caractérisé en ce que** les encoches (10,20) comportent un rétreint immédiatement en amont du réceptacle (14,24).

5. Dispositif selon la revendication 1, **caractérisé en ce qu'**il comporte un couvercle de protection (40) de l'équipement (2) ayant au moins un doigt de verrouillage (41) qui s'étend en saillie du couvercle et coopère avec l'un des amortisseurs (30) pour verrouiller celui-ci en position dans l'encoche (20) correspondante lorsque le couvercle est en position.

6. Dispositif selon la revendication 1, **caractérisé en ce que** les amortisseurs (30) sont rainurés extérieurement pour s'étendre à cheval sur les ailes (3).

7. Dispositif selon la revendication 1, **caractérisé en ce que** les amortisseurs (30) sont fixés à l'équipement au moyen de vis de fixation (31) s'étendant au travers des amortisseurs.

8. Dispositif selon l'une quelconque des revendications précédentes, **caractérisé en ce que** la portion d'extrémité (12) s'étend parallèlement au fond (4) du capot (1).

9. Procédé d'assemblage d'un dispositif selon la revendication 1, **caractérisé en ce qu'**il comporte l'étape de prééquiper l'équipement (2) avec les amortisseurs (30), puis de présenter l'équipement (2) au dessus du capot (1) pour engager les amortisseurs d'une des paires d'amortisseurs dans les premières encoches (10), puis de faire pivoter l'équipement pour engager les deux autres amortisseurs dans les deuxièmes encoches (20).

## Patentansprüche

1. Elektronische Vorrichtung, umfassend ein Gehäuse (1) und ein Gerät (2), das Schwingungen erzeugen kann und an dem Gehäuse befestigt ist, wobei das Gerät mit mindestens zwei Paaren von elastomeren Dämpfern (30) versehen ist, die an dem Gerät befestigt sind, um parallel zueinander zu sein, wobei die Dämpfer jedes Paares von Dämpfern zu beiden Seiten des Geräts angeordnet sind, indem sie auf eine gemeinsame Achse (X, X') ausgerichtet sind, wobei das Gehäuse zwei parallele Flügel (3) umfasst, die von einem Boden (4) des Gehäuses abstehen und jeweils einen Rand (13) aufweisen, an dem zwei Auskerbungen (10, 20) münden, die Endabschnitte haben, die Aufnahmen für die elastomeren Dämpfer (30) bilden, derart, dass die gemeinsame Achse (X, X') senkrecht zu den Flügeln ist, **dadurch gekennzeichnet, dass** das Gehäuse aus Kunststoff ist, die Auskerbungen zwei gegenüberliegende erste Auskerbungen (10) umfassen, die jeweils in einem Flügel ausgebildet sind und einen Endabschnitt (12) haben, der in die Aufnahme mündet und einen Winkel ungleich Null mit einer zum Boden des Gehäuses senkrechten Richtung bildet, sowie zwei gegenüberliegende zweite Auskerbungen (20), die jeweils in einem Flügel ausgebildet sind, um sich in einer zum Boden (4) des Gehäuses (1) senkrechten Richtung zu erstrecken.

2. Vorrichtung nach Anspruch 1, **dadurch gekennzeichnet, dass** die ersten Auskerbungen (10) einen Eintrittsabschnitt (11) umfassen, der mit dem Endabschnitt (12) einen offenen Winkel bildet.

3. Vorrichtung nach Anspruch 1, **dadurch gekennzeichnet, dass** die Auskerbungen (10, 20) einen Eintrittsabschnitt (11, 21) umfassen, der in Richtung des Randes (13) des dazugehörigen Flügels (3) weiter wird.

4. Vorrichtung nach Anspruch 1, **dadurch gekennzeichnet, dass** die Auskerbungen (10, 20) direkt oberhalb der Aufnahme (14, 24) eine Einschnürung umfassen.

5. Vorrichtung nach Anspruch 1, **dadurch gekennzeichnet, dass** sie eine Schutzabdeckung (40) zum Schutz des Geräts (2) umfasst, die mindestens einen Verriegelungsfinger (41) hat, der von der Abdeckung absteht und mit einem der Dämpfer (30) zusammenwirkt, um diesen in seiner Position in der entsprechenden Auskerbung (20) zu verriegeln, wenn die Abdeckung in ihrer Position ist.

6. Vorrichtung nach Anspruch 1, **dadurch gekennzeichnet, dass** die Dämpfer (30) außen genutet sind, um auf den Flügeln (3) aufzusitzen.

7. Vorrichtung nach Anspruch 1, **dadurch gekennzeichnet, dass** die Dämpfer (30) an dem Gerät mittels Befestigungsschrauben (31) befestigt sind, die sich durch die Dämpfer erstrecken.

8. Vorrichtung nach einem der vorhergehenden Ansprüche, **dadurch gekennzeichnet, dass** sich der Endabschnitt (12) parallel zum Boden (4) des Gehäuses (1) erstreckt.

9. Verfahren zur Montage einer Vorrichtung nach Anspruch 1, **dadurch gekennzeichnet, dass** es den Schritt des Vorausstattens des Geräts (2) mit den Dämpfern (30) und dann des Anordnens des Geräts (2) oberhalb des Gehäuses (1) umfasst, um die Dämpfer eines der Paare von Dämpfern in die ersten Auskerbungen (10) einzusetzen, sowie daraufhin des Verschwenkens des Geräts, um die beiden anderen Dämpfer in die zweiten Auskerbungen (20) einzusetzen.

## Claims

1. An electronic device comprising a housing (1) and equipment (2) likely to generate vibration and fastened to the housing, the equipment being provided with at least two pairs of elastomer dampers (30) fastened to the equipment so as to be parallel to one another, the dampers in each pair of dampers being arranged on either side of the equipment and in alignment on a common axis (X, X'), the housing having two parallel strips (3) projecting from a bottom (4) of the housing and each presenting an edge (13) into which notches (10, 20) open out, the notches having terminal portions forming receptacles for the elastomer dampers (30) in such a manner that the common axis (X, X') is substantially perpendicular to the strips, the device being **characterized in that** the housing is made of plastics material, the notches comprising two first notches (10) facing each other, each of which is arranged in a respective strip and each of which has an end portion (12) opening out into the receptacle and forming a non-zero angle with a direction perpendicular to the bottom of the housing, and two second notches (20) facing each other and each arranged in a respective strip so as to extend in the direction perpendicular to the bottom (4) of the housing (1).

2. A device according to claim 1, **characterized in that** each first notch (10) includes an entry portion (11) that forms an obtuse angle with the end portion (12).

3. A device according to claim 1, **characterized in that** each notch (10, 20) has an entry portion (11, 21) that flares going towards the edge (13) of the associated strip (3).

4. A device according to claim 1, **characterized in that** each notch (10, 20) includes a constriction immediately upstream from the receptacle (14, 24).

5. A device according to claim 1, **characterized in that** it includes a protective cover (40) for the equipment (2), having at least one locking finger (41) that projects from the cover and that co-operates with one of the dampers (30) in order to lock it in position in the corresponding notch (20) when the cover is in position.

6. A device according to claim 1, **characterized in that** the dampers (30) are externally grooved so as to extend on both sides of the flanges (3).

7. A device according to claim 1, **characterized in that** the dampers (30) are fastened to the equipment by means of fastener screws (31) extending through the dampers.

8. A device according to any preceding claim, **characterized in that** the end portion (12) extends parallel to the bottom (4) of the housing (1).

9. A method of assembling a device according to claim 1, **characterized in that** it includes the step of pre-fitting the equipment (1) with the dampers (30), followed by presenting the equipment (2) above the housing (1) in order to engage the dampers of one of the pairs of dampers in the first notches (10), and then causing the equipment to pivot so as to arrange the other two dampers in the second notches (20).
